# EUROPÄISCHE PATENTSCHRIFT

(11) **EP 0 472 828 B1**
(45) Veröffentlichungstag und Bekanntmachung des Hinweises auf die Patenterteilung: **23.08.1995**
(21) Anmeldenummer: 91109157.7
(22) Anmeldetag: 05.06.1991
(51) Int. Cl.: F16H 59/04, G05G 25/02

(54) **Lagerung für einen Gangschalthebel**
Bearing for a gear shift lever
Palier pour levier de changement de vitesse

(30) Priorität: 23.08.1990 DE 4026652
(43) Veröffentlichungstag der Anmeldung: 04.03.1992
(73) Patentinhaber: Firma Carl Freudenberg, 69469 Weinheim (DE)
(72) Erfinder: Langhof, Rolf, W-6050 Offenbach (DE); Schütz, Michael, W-6149 Rimbach (DE)

(56) Entgegenhaltungen:
- EP-A- 0 072 465
- GB-A- 442 845
- JP-A-63 095 513
- SE-B- 485 105

## Beschreibung

Die Erfindung betrifft eine Lagerung für einen Gangschalthebel nach dem Oberbegriff des Anspruchs 1.

Eine solche Lagerung für einen Gangschalthebel ist aus der SE-B-458 105 bekannt. Zwischen dem Gangschalthebel und der Schaltkugel, die den Gangschalthebel in einem Teilbereich seiner axialen Erstreckung mit radialem Abstand außenumfangsseitig umschließt, ist eine schwingungsdämpfende Zwischenschicht angeordnet, die den gesamten Ringspalt ausfüllt. Der vergleichsweise leichtgewichtige Gangschalthebel ist durch die Ausgestaltung der Zwischenschicht nur wenig elastisch innerhalb der Schaltkugel aufgenommen. Die elastische Verformbarkeit der Zwischenschicht ist relativ gering und der Gangschalthebel weist daher eine eingeschränkte Relativbeweglichkeit auf. Die Isolierung eingeleiteter Schwingungen ist dementsprechend wenig befriedigend.

Aus der EP-A-0 072 465 ist eine Lagerung eines Gangschalthebels bekannt, wobei der Gangschalthebel und die Schaltkugel einstückig ineinander übergehend starr verbunden sind. Die Schaltkugel ist von einem Kugelkäfig umschlossen, der mittels eines Federelements gegenüber einem Montageflansch abgestützt ist.

Eine weitere Lagerung ist aus der DE-OS 24 60 769 bekannt. Die ringförmig ausgebildete, schwingungsisolierende Zwischenschicht ist dabei zwischen dem Kugelkäfig und dem Montageflansch angeordnet.

Aus der GB-A-442 845 ist ein Stützlager zum Stützen schwerer Lasten bekannt, umfassend einen konisch ausgebildeten Kern, der von einem entsprechend ausgebildeten Montageflansch koaxial umschlossen ist, wobei die einander zugewandten Oberflächen von Kern und Montageflansch durch ein konisch ausgebildetes Federelement aufeinander abgestützt sind. Die vorbekannte Lagerung kann beispielsweise in der Radaufhängung von Schienenfahrzeugen oder Kraftfahrzeugen zur Anwendung gelangen. Außerdem kann es vorgesehen sein, daß das Lager als Motorlager den Motor eines Kraftfahrzeugs abstützt. Ferner kann das vorbekannte Lager zur Abstützung schwerer Werkzeugmaschinen verwendet werden. Ein Hinweis darauf, daß das Lager zur Schwingungsisolierung eines vergleichsweise leichtgewichtigen Gangschalthebels zur Anwendung gelangen kann, ist der vorbekannten Druckschrift nicht zu entnehmen.

Der Erfindung liegt die Aufgabe zugrunde, eine Lagerung für einen Gangschalthebel der eingangs genannten Art derart weiterzuentwickeln, daß sich durch eine verbesserte elastische Verformbarkeit der Zwischenschicht eine verbesserte, schwingungstechnische Isolierung des Gangschalthebels in bezug auf den Montageflansch ergibt.

Diese Aufgabe wird erfindungsgemäß bei einer Lagerung der eingangs genannten Art mit den kennzeichnenden Merkmalen von Anspruch 1 gelöst. Auf vorteilhafte Ausgestaltungen nehmen die Unteransprüche Bezug.

Für die Herstellung der Lagerung wird dadurch nicht nur ein relativ vermindertes Volumen an gummielastischem Werkstoff benötigt, was unter Kostengesichtspunkten von großem Vorteil ist, sondern es ergibt sich darüber hinaus durch die spezifisch erhöhte Querschnittsbelastung eine vergleichsweise verbesserte Verformbarkeit, was dem Wunsche nach einer verbesserten Schwingungsisolierung des Gangschalthebels in bezug auf den Montageflansch entgegenkommt.

Zwischen dem Gangschalthebel und der Schaltkugel ist eine Zwischenschicht aus Gummi einer Härte-Shore A von beispielsweise 45 angeordnet. Diese ist durch unmittelbares Anvulkanisieren einerseits mit dem Schalthebel und andererseits mit der Schaltkugel verbunden. Sie ist von kürzerer axialer Länge als die Schaltkugel und verleiht dem Schalthebel, bezogen auf den Montageflansch, eine ausgezeichnete Relativbeweglichkeit. Schwingungen, die während der bestimmungsgemäßen Verwendung über den Montageflansch in eine Karosserie eingeleitet werden, werden durch die Maßnahmen in ausgezeichneter Weise von dem Schalthebel isoliert. Sie können sich nicht mehr in störender Weise in dem Schalthebel bemerkbar machen.

Die Zwischenschicht besteht im allgemeinen aus Gummi einer Härte-Shore A von 30 bis 60. Als bevorzugt hat es sich herausgestellt, Gummi einer Härte-Shore A von 40 bis 50 zu verwenden. Dieses ist auf adhäsive Weise einerseits mit der Schaltkugel und andererseits mit dem Gangschalthebel verbunden, was beispielsweise durch unmittelbares Anvulkanisieren erfolgen kann. Bei Verwendung einer entsprechenden Befestigungsmethode bietet es sich zugleich an, der Zwischenschicht eine Form zu geben, die elastische Verformungen begünstigt. Die Zwischenschicht ist zur Erreichung dieses Zweckes mit in Umfangsrichtung verteilten Ausnehmungen versehen, die sich parallel zur Längsrichtung des Gangschalthebels erstrecken.

Die elastische Zwischenschicht kann in radialer Richtung nach innen und in radialer Richtung nach außen durch Flächen begrenzt sein, die sich parallel zueinander erstrecken. Ihre Gestaltung ist im übrigen beliebig und von den speziellen Gegebenheiten des Anwendungsfalles abhängig. Eine zylindrische Gestaltung der Flächen hat sich im allgemeinen als leicht herstellbar und schwingungstechnisch günstig erwiesen.

Die Anbringung kugelig gestalteter Flächen begünstigt eine Schwingungsisolierung des Schalthebels im statisch unbelasteten Zustand. Eine kegelige Gestaltung der Flächen empfiehlt sich demgegenüber in Anwendungsfällen, in denen mit einer statischen Vorlast unter normalen Betriebsbedingungen zu rechnen ist.

Die Zwischenschicht kann axial zumindest in einer Richtung eine in radialer Richtung vergrößerte Wandstärke haben, was in Richtung der Vergrößerung der Wandstärke eine verbesserte Schwingungsisolierung bedingt, bezogen auf die entgegengesetzte Richtung. Dem Auftreten von Resonanzschwingungen des Schalthebels läßt sich hierdurch wirksam begegnen.

Ausführungen dieser Art, bei denen die Zwischenschicht nur in axialer Richtung nach oben eine in radialer Richtung vergrößerte Wandstärke aufweist, erlauben problemlos eine Aufnahme erheblicher statischer Vorbelastungen. Ausführungen, bei denen die Zwischenschicht nur in axialer Richtung nach unten eine in radialer Richtung vergrößerte Wandstärke aufweist, zeichnen sich demgegenüber durch eine besonders gute Schwingungsisolierung aus, wenn sich während der bestimmungsgemäßen Verwendung eine Belastung durch sekundäre Kräfte ergibt, beispielsweise durch die Handauflagekraft des Benutzers.

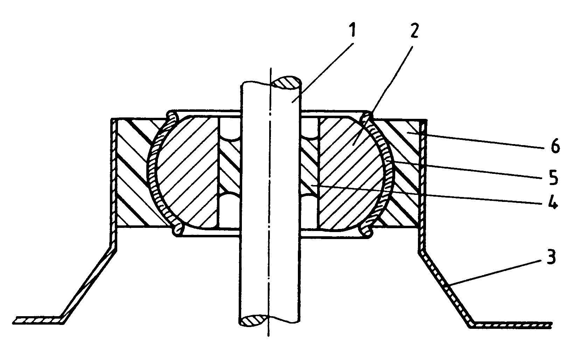

Der Gegenstand der Erfindung wird nachfolgend anhand der Zeichnung weiter verdeutlicht.

Die in der Zeichnung gezeigte beispielhafte Lagerung für einen Gangschalthebel 1 ist in längsgeschnittener Darstellung wiedergegeben. Der Gangschalthebel 1 ist hierbei in einer Schaltkugel 2 aus metallischem Werkstoff aufgenommen und von einem Montageflansch 3 umschlossen, der mit der Karosserie eines Kraftfahrzeuges verbindbar ist. Die Schaltkugel 2 ist ihrerseits relativ verdrehbar in einem Kugelkäfig 5 aus polymerem Werkstoff gelagert, welcher durch ein ringförmig ausgebildetes Federelement 6 auf dem Montageflansch 3 abgestützt ist.

Zwischen dem Gangschalthebel 1 und der Schaltkugel 2 ist eine Zwischenschicht 4 aus Gummi einer Härte-Shore A von 45 angeordnet. Diese ist durch unmittelbares Anvulkanisieren einerseits mit dem Schalthebel 1 und andererseits mit der Schaltkugel 2 verbunden. Sie ist von kürzerer axialer Länge als die Schaltkugel 2 und verleiht dem Schalthebel 1, bezogen auf den Montageflansch 3, eine ausgezeichnete Relativbeweglichkeit.

## Patentansprüche

1. Lagerung für einen Gangschalthebel (1), der in einer Schaltkugel (2) aufgenommen ist, wobei die Schaltkugel (2) relativ verdrehbar in einem Kugelkäfig (5) gelagert ist, der gegenüber einem mit einer Karosserie verbindbarem Montageflansch (3) abgestützt ist, wobei eine ringförmig ausgebildete, schwingungsisolierende Zwischenschicht (4) zwischen dem Gangschalthebel (1) und der Schaltkugel (2) angeordent ist, dadurch gekennzeichnet, daß die Zwischenschicht (4) von kürzerer axialer Länge ist, als die Schaltkugel (2), und daß die Zwischenschicht (4) in Umfangsrichtung verteilte Ausnehmungen aufweist, die sich parallel zur Längsrichtung des Gangschalthebels (1) erstrecken.

2. Lagerung für einen Gangschalthebel. nach Anspruch 1, dadurch gekennzeichnet, daß die Zwischenschicht (4) aus Gummi einer Härte-Shore A von 30 bis 60 besteht.

3. Lagerung für einen Gangschalthebel nach Anspruch 1, dadurch gekennzeichnet, daß die Zwischenschicht (4) aus Gummi einer Härte-Shore A von 40 bis 50 besteht.

4. Lagerung für einen Gangschalthebel nach Anspruch 1 bis 3, dadurch gekennzeichnet, daß die Zwischenschicht (4) in radialer Richtung nach innen und in radialer Richtung nach außen durch Flächen begrenzt ist, die sich parallel zueinander erstrecken.

5. Lagerung für einen Gangschalthebel nach Anspruch 4, dadurch gekennzeichnet, daß die Flächen zylindrisch gestaltet sind.

6. Lagerung für einen Gangschalthebel nach Anspruch 4, dadurch gekennzeichnet, daß die Flächen kugelig gestaltet sind.

7. Lagerung für einen Gangschalthebel nach Anspruch 4, dadurch gekennzeichnet, daß die Flächen kegelig gestaltet sind.

8. Lagerung für eine Gangschalthebel nach Anspruch 1 bis 3, dadurch gekennzeichnet, daß die Zwischenschicht (4) axial zumindest in einer Richtung eine in radialer Richtung vergrößerte Wandstärke aufweist.

9. Lagerung für einen Gangschalthebel nach Anspruch 8, dadurch gekennzeichnet, daß die Zwischenschicht nur in axialer Richtung nach oben eine in radialer Richtung vergrößerte Wandstärke aufweist.

10. Lagerung für einen Gangschalthebel nach Anspruch 8, dadurch gekennzeichnet, daß die Zwischenschicht nur in axialer Richtung nach unten eine in radialer Richtung vergrößerte Wandstärke aufweist.

## Claims

1. A mounting for a gear-shift lever (1) which is received in a shifting ball (2), the shifting ball (2) being mounted relatively rotatably in a ball cage (5) which is supported relative to an assembly flange (3) connectable to a body, an annularly designed vibration-insulating intermediate layer (4) being arranged between the gear-shift lever (1) and the shifting ball (2), characterized in that the intermediate layer (4) is of shorter axial length than the shifting ball (2), and in that the intermediate layer (4) has recesses which are distributed in the circumferential direction and which extend parallel to the longitudinal direction of the gear-shift lever (1).

2. A mounting for a gear-shift lever according to claim 1, characterized in that the intermediate layer (4) consists of rubber of a Shore A hardness of 30 to 60.

3. A mounting for a gear-shift lever according to claim 1, characterized in that the intermediate layer (4) consists of rubber of a Shore A hardness of 40 to 50.

4. A mounting for a gear-shift lever according to any of claims 1 to 3, characterized in that the intermediate layer (4) is limited inwards in the radial direction and outwards in the radial direction by faces which extend parallel to one another.

5. A mounting for a gear-shift lever according to claim 4, characterized in that the faces are made cylindrical.

6. A mounting for a gear-shift lever according to claim 4, characterized in that the faces are made spherical.

7. A mounting for a gear-shift lever according to claim 4, characterized in that the faces are made conical.

8. A mounting for a gear-shift lever according to any of claims 1 to 3, characterized in that the intermediate layer (4) has a radially increased wall thickness axially at least in one direction.

9. A mounting for a gear-shift lever according to claim 8, characterized in that the intermediate layer has a radially increased wall thickness only in the upward axial direction.

10. A mounting for a gear-shift lever according to claim 8, characterized in that the intermediate layer has a radially increased wall thickness only in the downward axial direction.

## Revendications

1. Palier pour un levier de changement de vitesse (1) qui est logé dans une bille de changement de vitesse (2), la bille de changement de vitesse (2) étant montée de manière relativement orientable dans une cage à billes (5) qui est étayée contre une bride de montage (3) susceptible d'être reliée à une carrosserie, une couche intermédiaire (4) annulaire antivibratoire étant placée entre le lever de changement de vitesse (1) et la bille de changement de vitesse (2), caractérisé en ce que la couche intermédiaire (4) a une longueur axiale inférieure à celle de la bille de changement de vitesse (2) et en ce que la couche intermédiaire (4) comporte des évidements répartis dans le sens de la circonférence, qui sont disposés en parallèle au sens longitudinal du levier de changement de vitesse (1).

2. Palier pour un levier de changement de vitesse selon la revendication 1, caractérisé en ce que la couche intermédiaire (4) est en caoutchouc d'une dureté Shore A comprise entre 30 et 60.

3. Palier pour un levier de changement de vitesse selon la revendication 1, caractérisé en ce que la couche intermédiaire (4) est en caoutchouc d'une dureté Shore A comprise entre 40 et 50.

4. Palier pour un levier de changement de vitesse selon l'une des revendications 1 à 3, caractérisé en ce que la couche intermédiaire (4) est délimitée dans le sens radial vers l'intérieur et dans le sens radial vers l'extérieur par des surfaces qui s'étendent parallèlement les unes par rapport aux autres.

5. Palier pour un levier de changement de vitesse selon la revendication 4, caractérisé en ce que les surfaces ont la forme d'un cylindre.

6. Palier pour un levier de changement de vitesse selon la revendication 4, caractérisé en ce que les surfaces ont la forme d'une sphère.

7. Palier pour un levier de changement de vitesse selon la revendication 4, caractérisé en ce que les surfaces ont la forme d'un cône.

8. Palier pour un levier de changement de vitesse selon l'une des revendications 1 à 3, caractérisé en ce que la couche intermédiaire (4) comporte axialement, au moins dans un sens, une épaisseur de paroi plus forte dans le sens radial.

9. Palier pour un lever de changement de vitesse selon la revendication 8, caractérisé en ce que la couche intermédiaire comporte seulement dans le sens axial vers le haut une épaisseur de paroi plus forte dans le sens radial.

10. Palier pour un levier de changement de vitesse selon la revendication 8, caractérisé en ce que la couche intermédiaire comporte seulement dans le sens axial vers le bas une épaisseur de paroi plus forte dans le sens radial.
